# EUROPEAN PATENT SPECIFICATION

(11) **EP 0 381 872 B1**
(45) Date of publication and mention of the grant of the patent: **06.09.1995**
(21) Application number: 89200321.1
(22) Date of filing: 10.02.1989
(51) Int. Cl.: C08B 30/04

(54) **Process for the fractionation of oats**
Verfahren zur Fraktionierung von Hafer
Procédé de fractionnement d'avoine

(43) Date of publication of application: 16.08.1990
(73) Proprietor: DORR-OLIVER INCORPORATED, Stamford Connecticut 06904-9312 (US); Alko Group Ltd., 00180 Helsinki (FI)
(72) Inventor: Wilhelm, Eckart Dr., D-4930 Detmold (DE); Kempf, Wolfgang Prof., D-4930 Detmold (DE); Caransa, Abraham, NL-1422 KZ Uithoorn (NL); Karinen, Pertti, SF-05200 Rajamaki (FI); Lehmussaari, Antti, SF-05200 Rajamaki (FI); Lehtomaki, Ilkka, SF-05200 Rajamaki (FI)
(74) Representative: Kooy, Leendert Willem

(56) References cited:
- EP-A- 0 088 498
- EP-A- 0 267 637
- DIE STÄRKE, vol. 39, no. 5, 1987, pages 153-157, VCH Verlagsgesellschaft mbH,Weinheim, DE; E. WILHELM et al.: "Hafer, Gerste und Triticale - Eigenschaftenund Chancen für die technische Stärkegewinnung"

## Description

This invention relates to a process for the fractionation of oats comprising milling oat-grains, soaking the resulting oat-flour in an aqueous medium, screening and dewatering a fibre-comprising fraction, separating a protein fraction from a starch fraction, and dewatering the protein and starch fractions, respectively.

Production of starches from unconventional cereals has been of particular interest during the second world war when starch bearing raw materials like maize were not available. Starch production from rye, barley and oats has been tested in spite of lower starch contents and serious technological problems due to beta-glucans and other viscous compounds. Detailed descriptions of the various processes are only given for rye starch in German patents (DRP 639 606 and DRP 742 638 as well as DRP 739 530) whereas little information of oat starch recovery is known from that time.

Die Stärke, vol. 39, no. 5, 1987, pages 153-157 discloses a process for the recovery of starch from oats or barley, involving the steps of milling the whole grains, soaking the resulting flour in an aqueous medium containing sodium hydroxide or sodium sulfite having a pH of 8.9, screening and dewatering a fibre-comprising fraction, and separating starch from protein by centrifugation yielding a crude starch fraction.

EP-A-267637 discloses a process for the fractionation of cereals by subjecting dry-ground dehusked grains to a soaking step using cell wall degrading enzymes, isolating a fibre-fraction, separating a protein fraction from a crude starch fraction, and fractionating the crude starch into a primary starch fraction and a secondary starch fraction. The only cereal species mentioned in this reference is barley.

US patent No. 4,028,468 describes a process of fractionating oats, comprising grinding dehulled oat groats to form an oat flour, separating a coarse branny fraction containing oat starch and a fine fraction containing starch endosperm, and fractionating the coarse fraction to recover a bran fraction, oat gum and a protein-starch fraction. Alternatively, the starch may be recovered together with the bran fraction.

Canadian patent No. 1,179,189 describes a process for fractionating oats, comprising soaking the grains in an aqueous medium, squeezing the soaked grains between rollers, and separating the resulting liquified endosperm portion from the non-endospermic materials by screening. The liquid endosperm dispersion may be centrifuged to yield a soluble fraction and an insoluble fraction, the latter containing starch and seed storage proteins. Alternatively, the liquid endosperm may be separated in starch an protein fractions by pH control and centrifuging.

Although various fractionation techniques have been described separating different oat products by wet-milling and extraction processes, a suitable avenue to the production of oat starch has not been developed so far.

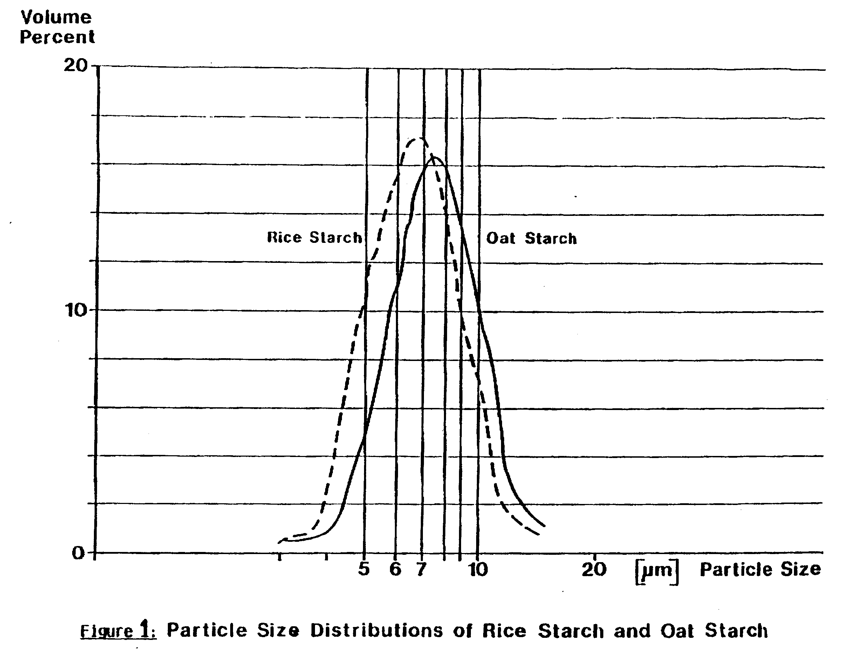

Oat starch is comparable to rice starch in its physical and morphological properties. Granule size of oat starch is almost as small as that of rice starch. Both starches have a narrow range in particle size distribution as shown in Figure 1.

Small granule starches are of particular importance for sizing of silk, the production of fine printing paper, technical and cosmetic powders, biodegradeble synthetic material and plastic sheets for various fields of modern agricultural and technical application. Starch granule size has a significant effect on homogeneity of synthetic polymers having incorporated therein starch granules and on the resulting mechanical and thermal properties of such compositions.

Utilization of small granule starches in top coatings of papers results in better printability and a less glossy surface preferred in modern printing papers. Small granule starches with decreased water binding capacity and lower swelling capacity are suitable for manufacture of coated papers, due to stabilized structures of the starch modificates in modern high speed paper coating processes with short drying periods.

Novel raw materials for starch manufacturing processes have gained greater importance since by-products of high value become more and more decisive for the economy of the entire production process. Oats as raw material not only contains starches with novel technically suitable properties but also proteins, lipids, fibers, β-glucans and other soluble by-products being of particular importance for modern human nutrition as well as various industrial utilization purposes.

Therefore, it is an objective of the present invention to provide a process for fractionating oats in a simple and efficient manner to recover highly pure fibre, gluten and starch fractions.

According to the invention there is provided a process for the fractionation of oats comprising the consecutive steps of
a) dry-milling dehulled oat-grains,
b) soaking the resulting oat-flour in an aqueous medium containing sulfur dioxide,
c) screening and dewatering a fibre fraction,
d) separating a gluten fraction from a crude starch fraction, and dewatering the gluten fraction, and
e) fractionating the crude starch fraction by feeding it to a fractionating multicyclone, washing the underflow in a multicyclone counter-current washing system under the addition of fresh water yielding a primary (A) starch fraction and dewatering said A-starch fraction, and dewatering the overflow of the fractionating multi-cyclone yielding a secondary (B) starch fraction.

In a preferred embodiment of the process of the invention the soaking step (b) is carried out in an aqueous medium containing cell wall degrading enzymes, specified by the enzyme preparation Econase CE 15, at a temperature of 40-48°C.

### DESCRIPTION OF THE DRAWINGS

Particle size distributions of oat and rice starches are compared in Figure 1.

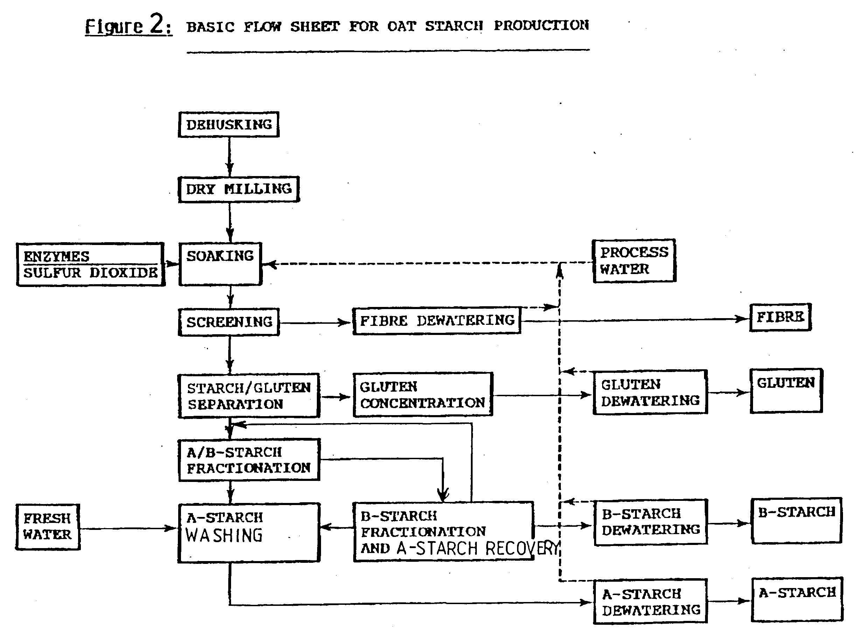

Figure 2 presents a basic flow sheet for the fractionation of oats according to the invention, a combination of process steps for fractionation and separation of A-starch, B-starch, protein and fibre.

In the following typical process steps of the invention (indicated in capitals in Figure 2) are described in detail.

Dehulling is achieved with standard impact equipment but without the use of steam. Also in the subsequent process steps temperatures higher than 48°C should be avoided in order to preserve the native character of oat starch and the by-products.

For dry-milling any conventional mill can be used.

Because of the high lipid content of oats soaking of the flour under constant agitation in process water follows immediately.

Usually a ratio of water to flour of 2.5/1 to 3.0/1 is used. Conveniently about 200 ppm sulfur dioxide is added as sodiummetabisulfite. The slurry is heated to 40-48°C, preferably 45°C, in a tank. It is preferred to add cell wall degrading enzymes to the soaking medium. Agitation and enzyme treatment is continued for 2 to 3 hours to acitivate hydrolysis of by-products in oat flour like hemicelluloses, beta-glucans and pectins. Partial degradation of endospermic and peripheric cell structures lead to better separation of the attached starch particles, better extraction of the bound starch particles, better separation and improved final dewatering of starch, fibre and protein. The enzyme preparation used in the described test runs was "Econase CE 15" produced by Alko using a strain of Trichoderma reesei with the main components endo-1,4-β-D-glucanase (EC 3.2.1.4) and cellobiohydrolase (EC 3.2.1.91) and a wide range of side-activities, e.g. hemicellulase (xylanase),

The enzyme treated homogenous slurry is screened in counter current with water on conical rotating screen, screen bends having 50 and 75 µm openings or others. Fibre dewatering may be effected in a screw press, on a vacuum filter or decanter.

In the next step crude starch and gluten are separated, for example by decantation. The gluten fraction is concentrated, for example in a disc nozzle separator before dewatering in a decanter.

The crude starch is then fractionated to recover A and B starch fractions. The crude starch is fed to a fractionating multicyclone, the underflow is washed in a multicyclone counter-current washing system under the addition of fresh water, and the resulting A-starch is dewatered, and the overflow of the fractionating multicyclone is dewatered to recover the B-starch. B-starch is inferior in quality compared to A-starch due to the presence of protein, lipid and other impurities.

Conveniently, the multicyclones have a diameter of about 10 mm.

It is preferred to employ higher than usual g-forces in the fractionating multicyclones to obtain an effective separation.

The g-force in the fractionating multicyclone should be at least 7500, preferably 8000-9000, whereas the g-force in the washing multicyclones is at least 4500, preferably 5000-6000.

In a preferred embodiment the overflow of the fractionating multicyclone is split into a B-starch fraction and residual A-starch, the latter being recycled to the feed of the fractionating multicyclone.

In spite of the almost identical granule sizes of rice- and oat-starch it was surprising to notice that an effective separation of oat starch was possible in 10 mm dia multicyclones at elevated g-forces resulting from higher operating pressures whereas this has never been possible with rice starch unless unacceptable losses were taken into account.

All dewatering steps were carried out in decanters and screwpresses and the products have been subsequently dried. Low solids were recycled as process water to minimize the overall water consumption and losses of products.

### EXAMPLE

An oat starch production test run selected from a series of representative runs in a finish pilot pant was started at a rate of 800 kg/h oat flour (produced from dehulled oats in a hammer mill equipped with two 1.5 mm screens). The flour was mixed with
2.75 t fresh and process water
0.8 l cellulase Alko Econase CE 15 and
200 g sulfurdioxide (sodiumbisulfite)
per ton of flour.

Retention time was set to 3 hours at 48°C for optimal operation of the homogenizator, conical rotating screens and fibre screw press. Starch separator underflow was set at 13-14 Bé to obtain optimal separation of starch and protein. Protein separator underflow was set at 150 g/l and the final dewatering was done in a decanter. B-starch has also been dewatered in a decanter.

| Number of Cyclonettes | | Baumé-Values [Bé] | | |
|---|---|---|---|---|
| Fractionation stage 24 | | Fractionation | | |
| W 1 | 17 | stage | overflow | 8 |
| W 2 | 17 | W 1 | underflow | 15 |
| W 3 | 18 | W 2 | overflow | 8 |
| W 4 | 19 | W 10 | underflow | 15 |
| W 5 | 20 | W 11 | overflow | 11-13 |
| W 6 | 21 | | | |
| W 7 | 21 | | | |
| W 8 | 22 | | | |
| W 9 | 22 | | | |
| W 10 | 22 | | | |
| W 11 | 14 | | | |

The crude starch could be fractionated and purified in 10 mm dia multicyclones using a hydrocyclone Δ p of 8 bars resulting in a g-force of 8500 in the fractionation multicyclone, and a Δ p of 4.5 bars resulting in 5200 x g in the washing system.

All material flows are measured and analysed for dry substance, starch, fibre, protein and lipid contents. From these measurements and determinations the overall material balance was calculated as shown in Table 1 and Table 2.

**TABLE 1**

| Starch Material Balance *) | |
|---|---|
| Fraction | Distribution of Starch (% DS) |
| A-Starch | 55 - 65 |
| B-Starch | 31 - 21 |
| Protein | 10 |
| Fibre | 2 |
| Process Water | 2 |

| | |
|---|---|
| *) Determination of Crude Starch Content by Hydrochloric Acid Method (ISO 1744) | |

**TABLE 2**

| Protein Material Balance *) | |
|---|---|
| Fraction | Distribution of Protein (% DS) |
| A-Starch | < 1 |
| B-Starch | 10 - 15 |
| Gluten | 55 - 50 |
| Fibre | 6 |
| Process Water | 28 |

| | |
|---|---|
| *) Determination of Crude Protein Content by Kjeldahl Gunning Procedure (ISO 5378 - 1978) | |

Results listed in Table 1 demonstrate the efficiency of the process steps of the present invention yielding a high starch recovery and a high purity of the A-starch in spite of the small granule size and the relatively high protein and lipid contents in oats compared to other cereals. Protein content remaining in A-starch is in actual fact lower than 0.5% (Table 2). Whiteness of oat A-starch: 96, according to ISO/DIS 6473 ELREPHO measurement. Consumption of fresh water is comparable to that of wheat starch production.

Although the present invention has been described in conjunction with preferred equipment, it is to be understood that modifications and variations may be selected without departing from the spirit and scope of the invention. Such modifications and variations are considered to be within the purview and scope of the invention and appended claims.

## Claims

1. A process for the fractionation of oats comprising milling oat-grains, soaking the resulting oat-flour in an aqueous medium, screening and dewatering a fibre-comprising fraction, separating a protein fraction from a starch fraction, and dewatering the protein and starch fractions, respectively, **characterized in that** the process comprises the consecutive steps of
a) dry-milling dehulled oat-grains,
b) soaking the resulting oat-flour in an aqueous medium containing sulfur dioxide,
c) screening and dewatering a fibre fraction,
d) separating a gluten fraction from a crude starch fraction, and dewatering the gluten fraction, and
e) fractionating the crude starch fraction by feeding it to a fractionating multicyclone, washing the underflow in a multicyclone counter-current washing system under the addition of fresh water yielding a primary (A) starch fraction and dewatering said A-starch fraction, and dewatering the overflow of the fractionating multicyclone yielding a secondary (B) starch fraction.

2. A process according to claim 1, **characterized in that** the soaking step (b) is carried out in an aqueous medium containing cell wall degrading enzymes, specified by the enzyme preparation Econase CE 15, at a temperature of 40-48°C.

3. A process according to claim 1 or 2, **characterized in that** the fractionating step (e) is carried out using multicyclones having a diameter of about 10 mm.

4. A process according to any of the preceding claims, **characterized in that** the g-force in the fractionating multicyclone is at least 7500 and the g-force in the washing multicyclones is at least 4500.

5. A process according to any of the preceding claims, **characterized in that** the overflow of the fractionating multicyclone is split into a B-starch fraction and residual A-starch, the latter being recycled to the feed of the fractionating multicyclone.

## Patentansprüche

1. Verfahren zur Fraktionierung von Hafer, enthaltend das Mahlen von Haferkörnern, das Einweichen des dabei gewonnenen Hafermehls in einem wässrigen Medium, das Sichten und Entwässern eines Fasern enthaltenden Anteils, das Trennen eines Proteinanteils von einem Stärkeanteil, und das Entwässern der Protein- bzw. Stärkeanteile, dadurch gekennzeichnet, daß das Verfahren die nachfolgenden Verfahrensschritte enthält:
a) das Trockenmahlen geschälter Haferkörner,
b) das Einweichen des dabei gewonnenen Hafermehls in einem wässrigen Medium, enthaltend Schwefeldioxid,
c) das Sichten und Entwässern eines Fasernanteils,
d) das Trennen eines Glutenanteils von einem Rohstärkeanteil und das Entwässern des Glutenanteils und
e) das Fraktionieren des Rohstärkeanteils durch Aufgabe in einen Fraktionierungs-Mehrfachzyklon, das Waschen des Unterlaufs in einem Mehrfachzyklon-Gegenströmungswaschsystem unter Zufuhr von Frischwasser, wodurch ein Primärstärke-Anteil (A) gewonnen wird, und das Entwässern des A-Stärke-Anteils, sowie das Entwässern des Überlaufs des Fraktionierungs-Mehrfachzyklons, wodurch eine Sekundärstärkefraktion (B) gewonnen wird.

2. Verfahren nach Anspruch 1, dadurch gekennzeichnet, daß der Verfahrensschritt des Einweichens (b) in einem wäßrigen Medium, das zellwandabbauende Enzyme, beispielsweise das Enzympräparat Econase CE 15, enthält, bei einer Temperatur von 40° bis 48°C durchgeführt wird.

3. Verfahren nach Anspruch 1 oder 2, dadurch gekennzeichnet, daß der Verfahrensschritt des Fraktionierens (e) unter Verwendung von Mehrfachzyklonen mit einem Durchmesser von etwa 10 mm durchgeführt wird.

4. Verfahren nach einem der vorangegangenen Ansprüche, dadurch gekennzeichnet, daß die g-Kraft in den Fraktionierungs-Mehrfachzyklonen wenigstens 7.500 und die g-Kraft in den Wasch-Mehrfachzyklonen wenigstens 4.500 beträgt.

5. Verfahren nach einem der vorangegangenen Ansprüche, dadruch gekennzeichnet, daß der Überlauf des Fraktionierungs-Mehrfachzyklons in eine B-Stärkefraktion und einen A-Stärke-Rest aufgespalten wird, wobei letzterer wieder dem Aufgabeende des Fraktionierungs-Mehrfachzyklons zugeführt wird.

## Revendications

1. Procédé pour le fractionnement d'avoine comprenant le broyage de grains d'avoine, l'imprégnation de la farine d'avoine obtenue dans un milieu aqueux, le criblage et l'essorage d'une fraction constituée par des fibres, la séparation d'une fraction protéinique à partir d'une fraction amidon et l'essorage des fractions respectives de protéine et d'amidon, caractérisé en ce que le procédé comprend les étapes consécutives consistant à
a) broyer à sec les grains d'avoine décortiqués,
b) imprégner la farine d'avoine obtenue dans un milieu aqueux contenant du dioxyde de soufre,
c) cribler et essorer une fraction fibreuse,
d) séparer une fraction gluten d'une fraction d'amidon brut, et essorer la fraction gluten, et
e) fractionner la fraction d'amidon brut en l'amenant dans un multicyclone de fractionnement, laver le passé de crible dans un système de lavage à contre-courant multicyclone en ajoutant de l'eau fraîche donnant une fraction d'amidon primaire (A) et essorer cette fraction d'amidon A, et essorer le refus de crible du multicyclone de fractionnement donnant une fraction d'amidon secondaire (B).

2. Procédé selon la revendication 1, **caractérisé en ce que** l'étape d'imprégnation (b) s'effectue dans un milieu aqueux contenant des enzymes dégradant les parois cellulaires, spécifiées par la préparation enzymatique Econase CE 15, à une température de 40-48°C.

3. Procédé selon la revendication 1 ou 2, **caractérisé en ce que** l'étape de fractionnement (e) est effectuée en ayant recours à des multicyclones d'un diamètre d'environ 10 mm.

4. Procédé selon l'une quelconque des revendications précédentes, **caractérisé en ce que** la force g du multicyclone de fractionnement est au moins de 7500 et la force g dans les multicyclones de lavage est au moins de 4500.

5. Procédé selon l'une quelconque des revendications précédentes, **caractérisé en ce que** le refus de crible du multicyclone de fractionnement est divisé en une fraction d'amidon B et en une fraction d'amidon A résiduel, cette dernière étant recyclée dans la charge d'alimentation du multicyclone de fractionnement.
